Europäisches Patentamt

European Patent Office

Office européen des brevets

(19)

(11) Veröffentlichungsnummer: **0 156 792**

**A2**

## (12) EUROPÄISCHE PATENTANMELDUNG

(21) Anmeldenummer: 85890075.6

(22) Anmeldetag: 22.03.85

(51) Int. Cl.⁴: **A 01 G 25/09**

(30) Priorität: 26.03.84 AT 1016/84

(43) Veröffentlichungstag der Anmeldung:
02.10.85 Patentblatt 85/40

(84) Benannte Vertragsstaaten:
AT BE CH DE FR GB IT LI LU NL SE

(71) Anmelder: Ing. Waldhauser Maschinenfabrik
Gesellschaft mbH & Co. KG
Puchbachweg 239
A-8591 Maria Lankowitz(AT)

(72) Erfinder: Kertz, Anton
Weidenweg 5
A-8580 Köflach(AT)

(74) Vertreter: Gibler, Ferdinand, Dipl.Ing.Dr.tech.
Dorotheergasse 7/14
A-1010 Wien(AT)

(54) Antrieb für Beregnungsgeräte.

(57) Antrieb füe Beregnungsgeräte mit von einem Druckmedium durchströmten Leitungen und einem Antrieb für eine
auf einem Fahrgestell mit mindestens zwei Rädern und einer
Deichsel gehaltene Haspel, wobei das Fahrgestell T-förmig
ausgebildet ist und einen in Richtung der Deichsel verlaufenden Längsholm und einen dazu senkrecht verlaufenden
Querholm, an dem die Räder befestigt sind und der eine im
wesentlichen dreieckige Tragkonstruktion für die Lagerung
der Haspel trägt, und daß am Längsholm ein senkrecht zu
diesem und dem Querholm verlaufender Steher angeordnet
ist, der ein zweites Lager zur Lagerung der Haspel trägt.

Fig.1

EP 0 156 792 A2

Croydon Printing Company Ltd.

- 1 -

## Antrieb für Beregnungsgeräte

Die Erfindung bezieht sich auf einen Antrieb für Beregnungsgeräte mit von einem Druckmedium durchströmten Leitungen und
einem Antrieb für eine auf einem Fahrgestell mit mindestens
zwei Rädern und einer Deichsel gehaltene Haspel. Für solche
Antriebe war bisher ein relativ aufwendiger Fahrzeugrahmen
mit zwei Längs- und zwei Querträgern vorgesehen.

Ziel der Erfindung ist es, einen Antrieb der eingangs erwähnten
Art vorzuschlagen, der sich durch einen einfachen und kompakten
Aufbau auszeichnet.

Erfindungsgemäß wird dies dadurch erreicht, daß das Fahrgestell
T-förmig ausgebildet ist und einen in Richtung der Deichsel
verlaufenden Längsholm und einen dazu senkrecht verlaufenden
Querholm, an dem die Räder befestigt sind und der eine im
wesentlichen dreieckige Tragkonstruktion für die Lagerung der
Haspel trägt, und daß am Längsholm ein senkrecht zu diesem und
dem Querholm verlaufender Steher angeordnet ist, der ein zweites Lager zur Lagerung der Haspel trägt. Auf diese Weise ergibt sich ein sehr einfaches und kompaktes Fahrgestell.

Bei einem solchen Antrieb, bei dem der Antrieb für die Haspel einen von einem Arbeitsbalg beaufschlagten schwenkbaren Arm aufweist, der mit einem Antriebsrad der Haspel zusammenwirkt, ist nach einem weiteren Merkmal der Erfindung vorgesehen, daß der Arm an der dreieckigen Tragkonstruktion angelenkt ist und parallel zum Querholm verläuft und der im Bereich seines freien Endes eine in Richtung der Längsachse des Armes verlaufende Achse schwenkbare federbelastete Klinke trägt, die an ihrem freien Ende eine schräge Auflauffläche aufweist und mit aus dem in der dreieckigen Tragkonstruktion gehaltenen Antriebsrad der Haspel vorragenden Zapfen zusammenwirkt, die gleichmäßig auf einer Kreislinie des Antriebsrades verteilt angeordnet sind. Damit ergibt sich ein sehr kompakter und platzsparender Aufbau mit einem sehr einfach aufgebauten Mitnahmemechanismus für das Antriebsrad.

Um einen besonders kompakten Aufbau zu erreichen, kann bei einem erfindungsgemäßen Antrieb, bei dem der Antriebsbalg von einem Schlauchschaltwerk mit einem vom Druckmedium durchströmten Zulauf und einem Ablaufschlauch zwischen denen ein Rotor mit drei im gleichen Abstand voneinander und der Rotorachse angeordneten Anpressnoppen und die an der vom Rotor abgekehrten Seite abgestützt sind, gesteuert ist, ist nach einem weiteren Merkmal der Erfindung vorgesehen, daß an dem Arm eine Schaltkulisse befestigt ist, die den Rotor lediglich im Bereich des oberen und des unteren Totpunktes des Arbeitsbalges frei gibt und eine Drehung ermöglicht. Damit ergibt sich auf eine sehr einfache Kontruktion, bei der die bisher üblichen Übertragungsglieder, wie Ketten, Hebeln, die zur Übertragung der Bewegung vom Arm auf das Schlauchschaltwerk bisher vorgesehen waren, vermieden sind.

Weiters kann vorgesehen sein, daß der Längsholm zumindest in seinem vorderen Bereich hohl ausgebildet ist, in den die Deichsel einschiebbar ist, wodurch sich für den Transport des Antriebes eine erhebliche Erleichterung ergibt.

Die Erfindung wird nun an Hand der Zeichnung näher erläutert. Dabei zeigen:

Fig.1 eine Hinteransicht,

Fig.2 eine Seitenansicht und

Fig.3 eine Draufsicht auf einen erfindungsgemäßen Antrieb.

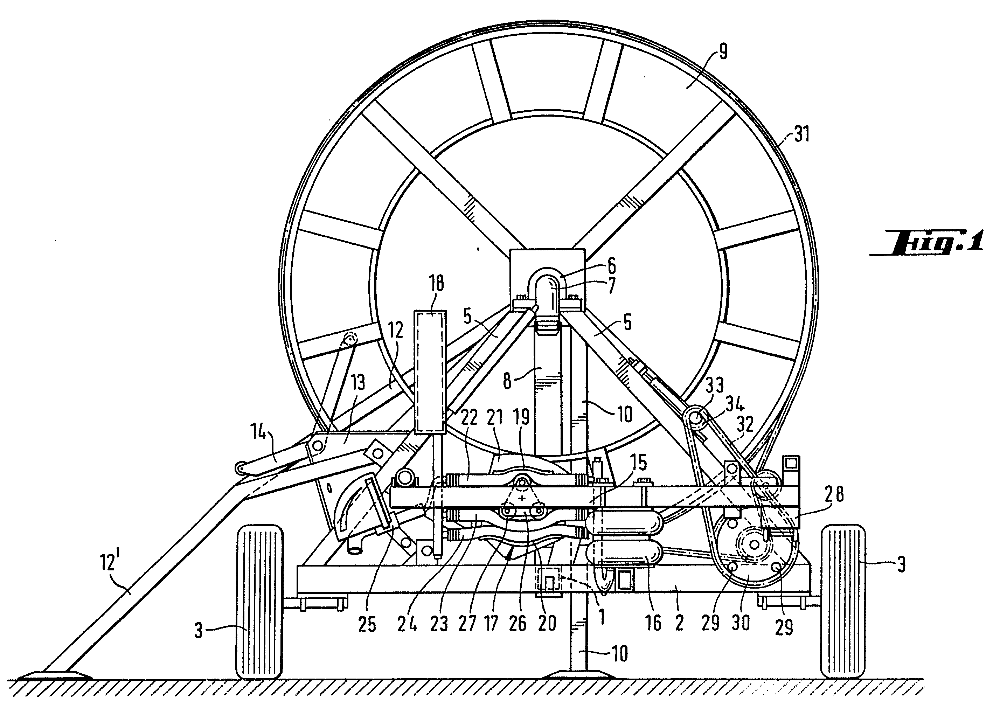

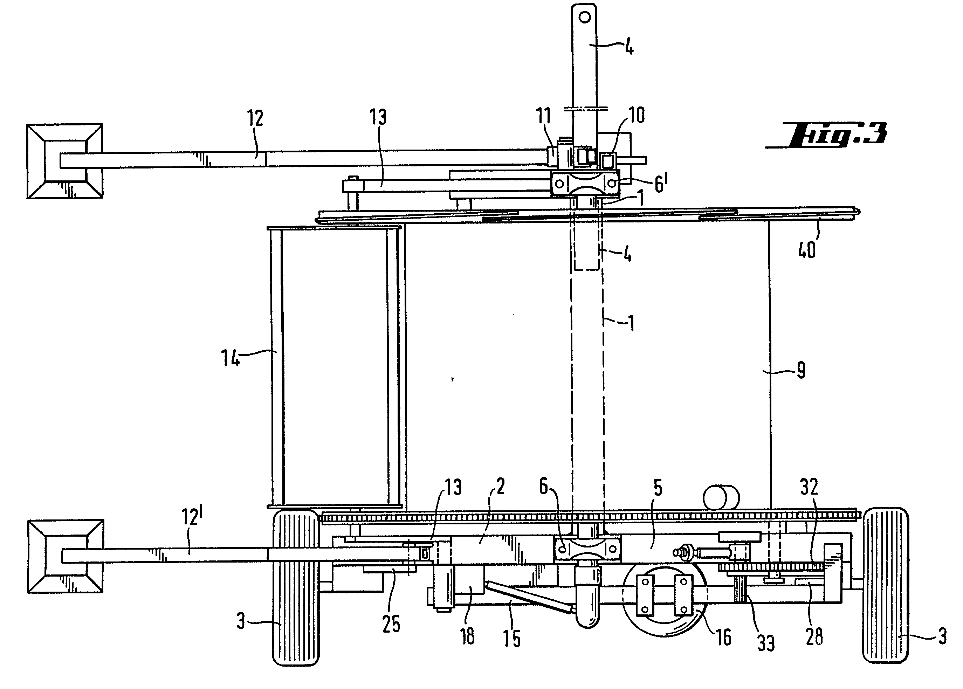

Wie aus Fig.1 bis 3 ersichtlich ist, weist der Antrieb ein aus einem Längsholm 1 und einem dazu senkrecht verlaufenden Querholm 2 bestehendes Fahrgestell auf, wobei die Räder 3 an dem Querholm 2 befestigt sind. Dabei ist die Deichsel 4 in den im vorderen Bereich hohl ausgebildeten Längsholm 1 einschiebbar.

An dem Querholm 2 ist eine im wesentlichen dreieckige Tragkonstruktion 5 befestigt, die ein Lager 6 und einen Mittelanschluß 7 für den Anschluß an eine Druckmediumquelle aufweist. Vom Längsholm 1 steht ein Steher 8 senkrecht ab, der ein zweites Lager 6' trägt, wobei in den beiden Lagern 6, 6' eine Haspel 9 drehbar gelagert ist.

Weiters ist seitlich des Längsholmes 1 eine Mittelstütze 10 befestigt, die beim Abstellen des Antriebes für die nötige Standsicherheit sorgt.

An dem Steher 8 ist weiters eine Halterung 11 für eine vordere Seitenstütze 12, die in der dargestellten Arbeitslage und einer nicht dargestellten etwa senkrechten Transportlage in die Halterung 11 einsteckbar und verriegelbar ist.

Eine weitere Seitenstütze 12' ist an der dreieckigen Tragkonstruktion 5 befestigt, die ebenfalls in einer Arbeitslage und einer Transportlage verriegelbar ist.

An der Tragkonstruktion 5 und am Steher 8 sind Konsolen 13
befestigt, in denen ein Abschaltbügel 14 gelagert ist, der
beim Auflaufen eines Regners beim Einziehen desselben die
Zufuhr des Druckmediums unterbricht und den Antrieb stillsetzt.

Von der Tragkonstruktion 5 steht parallel vom Längsholm 1
ein Bolzen ab, an dem ein Arm 15 schwenkbar gelagert, mit
einem am Querholm 2 angeordneten Arbeitsbalg 16 verbunden
ist. Dieser Arbeitsbalg 16 wird über ein Schlauchschaltwerk
17 und einen diesem vorgeschalteten Ausgleichsspeicher 18,
der an einem Holm der dreieckigen Tragkonstruktion 5 befestigt ist, vom Mittelanschluß 7 her mit einem Druckmedium
versorgt.

Das Schlauchschaltwerk 17 weist zwei feste Widerlager 19, 20
auf, die an einer Konsole 21 angeordnet sind, die ihrerseits
an dem Querträger 2 befestigt ist. An diesen Widerlagern
19, 20 sind Schläuche 22, 23, 24 abgestützt. Dabei verbindet
der Schlauch 22 den Arbeitsbalg 16 mit einem den Abfluß ins
Freie steuernden Ventil 25, mit dem die Hubfrequenz des
Arbeitsbalges 16 und damit, wie noch später erläutert werden
wird, die Drehzahl des Haspel 9 gesteuert werden kann. Der
Schlauch 23 verbindet den Ausgleichsspeicher 18 mit dem
Arbeitsbalg 16, wogegen der Schlauch 24 als druckabhängiges
Widerlager dient und nur mit dem Ausgleichsspeicher 18
verbunden und einseitig abgeschlossen ist. Zwischen den
Schläuchen 22, 23 befindet sich ein um einen in der Konsole 21
gehaltenen Zapfen drehbarer Rotor 26, der mit drei in gleichen Abständen von einander und von der Drehachse des Rotors
angeordneten Quetschrollen 27 bestückt ist. Diese Quetschrollen 27 quetschen abwechselnd den Schlauch 22 oder den Schlauch 23 soweit ab, daß der Durchfluß durch diesen Schlauch praktisch unterbunden ist. Das Weiterdrehen des Rotors wird durch den sich im abgequetschten Schlauch aufbauenden Druck bewirkt, wie dies z.B. in der DE-OS 26 17 699 beschrieben ist. Die beim Umschalten durch den Rotor auftretenden Druckschwankungen werden durch den Ausgleichsspeicher 18, der im wesentlichen vertikal steht und dessen Einlaß sich in Bodennähe befindet, weshalb es in diesem stets zu der Ausbildung eines Luftpolsters kommt, wesentlich gemildert.

Um ein Umschalten bzw. einen Wechsel der Absperrung eines Schlauches 22, 23 nur im Bereich der Totpunkte des Arbeitsbalges 16, der über die Schläuche 22, 23 abwechselnd mit dem Ausgleichsspeicher 18 und dem den Abfluß steuernden Ventil 25 verbunden ist und sich daher abwechselnd hebt und senkt, zu ermöglichen, ist an dem Arm 15 eine Schaltkulisse angeordnet, die eine Drehung des Rotors nur im Bereich der Totpunkte des Arbeitsbalges 16 ermöglicht.

Der als druckabhängiges Widerlager dienende Schlauch 24 dehnt sich je nach dem Druck mit dem der Ausgleichsspeicher 18, der vom Mittelanschluß 7 her mit Druckmedium versorgt wird, mehr oder weniger aus und verstärkt daher bei höher werdendem Druck des Druckmediums den Druck von dem den Arbeitsbalg mit Druckmedium versorgenden Schlauch 23, sodaß auch bei höheren Drücken eine sichere Unterbrechung des Zuflusses zum Arbeitsbalg erfolgt, wobei gleichzeitig bei kleineren Drücken eine überflüssige Beanspruchung des Schlauches 23 durch einen auch für hohe Drucke ausreichenden Pressdruck durch die Quetschrollen 27 unterbleibt.

Um das Entleeren des Arbeitsbalges nach einem Arbeitshub sicherzustellen, ist der Arm 15 relativ schwer und besteht z.B. aus einem mit Beton gefüllten Vierkantrohr.

Am freien Ende des Armes 15 ist eine um eine im Arm in dessen
Längsrichtung verlaufende Achse schwenkbare federbelastete
Klinke 28 vorgesehen, die eine schräge Auflauffläche aufweist.
Diese Auflauffläche bewirkt, daß die Klinke 28 entgegen der
Federbelastung beim Niedergehen des Armes 15 über die Zapfen
29 gleitet, die parallel zu der in der Tragkonstruktion 5
gehaltenen Achse des Antriebsrades 30 aus diesem vorstehen
und gleichmäßig entlang einer Kreislinie verteilt angeordnet
sind. Beim Arbeitshub des Arbeitsbalges 16 nach oben untergreift die Klinke 28 einen Zapfen 29 und nimmt diesen mit,
wodurch das Antriebsrad in Drehung versetzt wird.

Das Antriebsrad 30 ist über eine Welle mit einem Kettenrad
drehfest verbunden, über das eine die Haspel 9 umschlingende
Kette 31 geführt ist. Weiters ist auch das Antriebsrad 30 als
Kettenrad ausgebildet und ist über eine Kette 32 mit einem
mit einer Zapfwelle 33 verbundenen Kettenrad 34 verbunden.
Diese Einrichtung ermöglicht es, im Falle daß die Haspel 9
rasch bewickelt werden soll, an die Zapfwelle 33 einen Motor
oder einen mit einer entsprechenden Einrichtung versehenen
Traktor anzuschließen, um die Haspel wesentlich rascher als
durch den Arbeitsbalg drehen zu können.

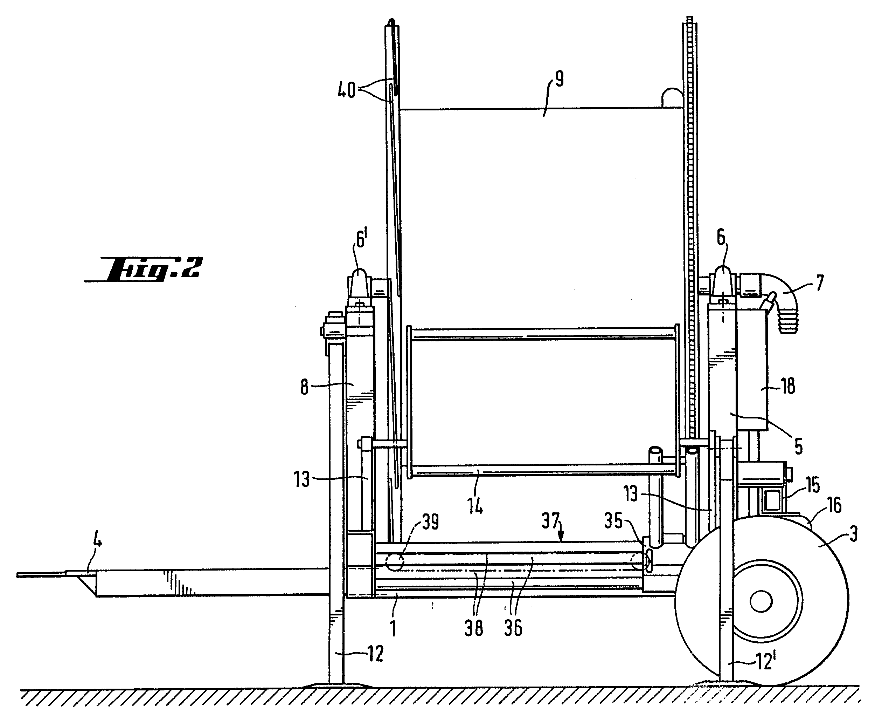

Wie aus Fig.2 ersichtlich, weist der Antrieb einen Wickelwagen 35 auf, für den eine durch zwei parallele Stangen 36
gebildete Führung 37 vorgesehen ist und der zu der Aufwicklung Windung an Windung z.B. des Schlauches eines
Regners dient.

Der Antrieb des Wickelwagens erfolgt mittels eines Wickelwagenantriebsrades 39 und ein Umlenkrad, die beide als
Kettenräder ausgebildet sind und über die eine umlaufende
Kette 38 geführt ist.

Das Wickelwagenantriebsrad 39 ist als Wechselrad vorgesehen und drehfest aber abziehbar auf eine Welle aufsteckbar und fixierbar. Mit dieser Welle ist ein mit den am Umfang der Haspel 9 angeordneter gegen oben der Haspelwangen schräg verlaufenden Lamellen 40 kämmendes Rad fest verbunden, sodaß ein festes Verhältnis der Drehzahlen des Haspel 9 und des Wickelwagenantriebsrades 39 gegeben ist.

Die Mitnahme des Wickelwagens 35 erfolgt mittels eines an der Kette 38 befestigten Bolzens, der in einen senkrecht zur Führung 37 verlaufenden Schlitz des Wickelwagens 35 an dessen der Kette zugekehrten Seite eingreift und in diesem verschiebbar ist. Dadurch kommt es in den Endbereichen des Weges des Wickelwagens zu einer wesentlichen Verlangsamung seiner Bewegung, wodurch, wie erwünscht, in diesen Bereichen je zwei einander anschließende Windungen übereinander gelegt werden.

Grundsätzlich muß der Vorschub des Wickelwagens 35 auf den Durchmesser des aufzuwickelnden Schlauches abgestimmt werden. Dazu ist es notwendig, eine entsprechende Übersetzung von der Haspel 9 zum Wickelwagenantriebsrad 39 zu wählen. Dies wird einfach durch Austausch des Wickelwagenantriebsrades durch ein solches mit einer dem jeweiligen Durchmesser des aufzuwickelnden Schlauches entsprechenden Zähnezahl erreicht.

Da bei einem Kettentrieb ein relativ großer Durchhang toleriert werden kann, können verschiedene Wickelwagenantriebsräder aufgesteckt werden, ohne daß deshalb auch die Kette getauscht werden muß, sodaß für etwa drei benachbarte genormte Schlauchdurchmesser mit einer Kette 38 das Auslangen gefunden wird.

**Patentansprüche:**

1.    Antrieb für Beregnungsgeräte mit von einem Druckmedium durchströmten Leitungen und einem Antrieb für eine auf einem Fahrgestell mit mindestens zwei Rädern und einer Deichsel gehaltene Haspel,
dadurch g e k e n n z e i c h n e t,
daß das Fahrgestell T-förmig ausgebildet ist und einen in Richtung der Deichsel (4) verlaufenden Längsholm (1) und einen dazu senkrecht verlaufenden Querholm (2), an dem die Räder (3) befestigt sind und der eine im wesentlichen dreieckige Tragkonstruktion (5) für die Lagerung der Haspel (9) trägt, und daß am Längsholm (1) ein senkrecht zu diesem und dem Querholm (2) verlaufender Steher (8) angeordnet ist, der ein zweites Lager (6') zur Lagerung der Haspel (9) trägt.

2.    Antrieb nach Anspruch 1, bei dem der Antrieb für die Haspel einen von einem Arbeitsbalg beaufschlagten schwenkbaren Arm aufweist, der mit einem Antriebsrad der Haspel zusammenwirkt, dadurch gekennzeichnet, daß der Arm (15) an der dreieckigen Tragkonstruktion (5) angelenkt ist und parallel zum Querholm (2) verläuft und der im Bereich seines freien Endes eine in Richtung der Längsachse des Armes (15) verlaufende Achse schwenkbare federbelastete Klinke (28) trägt, die an ihrem freien Ende eine schräge Auflauffläche aufweist und mit aus dem in der dreieckigen Tragkonstruktion (5) gehaltenen Antriebsrad (30) der Haspel (9) vorragenden Zapfen (29) zusammenwirkt, die gleichmäßig auf einer Kreislinie des Antriebsrades (30) verteilt angeordnet sind.

3.    Antrieb nach Anspruch 1 oder 2, bei dem der Antriebsbalg von einem Schlauchschaltwerk mit einem vom Druckmedium durchströmten Zulauf und einem Ablaufschlauch zwischen denen ein Rotor mit drei im gleichen Abstand voneinander und der Rotorachse angeordneten Anpressnoppen und die an der vom Rotor abgekehrten Seite abgestützt sind, gesteuert ist, dadurch gekennzeichnet, daß an dem Arm (15) eine Schaltkulisse befestigt ist, die den Rotor (26) lediglich im Bereich des oberen und des unteren Totpunktes des Arbeitsbalges (16) frei gibt und eine Drehung ermöglicht.

4.     Antrieb nach einem der Ansprüche 1 bis 3, dadurch gekennzeichnet, daß an der dreieckigen Tragkonstruktion (5) ein Ausgleichsspeicher befestigt ist, der dem Schlauchschaltwerk (17) vorgeschaltet ist und bei dem der Ein- und der Auslaß in Bodennähe angeordnet sind, sodaß sich in seinem Inneren eine Luftblase hält.

5.     Antrieb nach Anspruch 3 oder 4, dadurch gekennzeichnet, daß einer der Schläuche (23) des Schlauchschaltwerkes (17) über einen vom Druckmedium ständig beaufschlagten Schlauch (24) abgestützt ist.

6.     Antrieb nach einem der Ansprüche 1 bis 5, mit einem parallel zur Achse der Haspel verschiebbaren und über eine über Kettenräder umlaufende Kette antreibbaren Wickelwagen, wobei eines der Kettenräder über eine mit einem von der Haspel angetriebenen Rad verbundene Antriebswelle angetrieben ist, dadurch gekennzeichnet, daß das angetriebene Kettenrad (39) auf die Antriebswelle lose aufsteckbar ist.

7.     Antrieb nach einem der Ansprüche 1 bis 6, dadurch gekennzeichnet, daß der Längsholm (1) zumindest in seinem vorderen Bereich hohl ausgebildet ist, in den die Deichsel (4) einschiebbar ist.

Fig.1

Fig. 2

Fig.3